# EUROPÄISCHE PATENTSCHRIFT

(11) **EP 3 062 090 B1**
(45) Veröffentlichungstag und Bekanntmachung des Hinweises auf die Patenterteilung: **05.02.2020**
(21) Anmeldenummer: 16154387.1
(22) Anmeldetag: 05.02.2016
(51) Int. Cl.: G02B 5/00, G01N 21/88, G01N 21/89

(54) **BILDAUFNAHMEEINHEIT**
IMAGE RECORDING UNIT
DISPOSITIF D'ENREGISTREMENT D'IMAGES

(30) Priorität: 27.02.2015 AT 501562015
(43) Veröffentlichungstag der Anmeldung: 31.08.2016
(73) Patentinhaber: AIT Austrian Institute of Technology GmbH, 1220 Wien (AT)
(72) Erfinder: Holländer, Branislav, 4840 Vöcklabruck (AT); Stolc, Svorad, 831 01 Bratislava (SK); Huber-Mörk, Reinhold, 1220 Wien (AT)
(74) Vertreter: Wildhack & Jellinek

(56) Entgegenhaltungen:
- WO-A1-2015/164540
- DE-A1- 4 434 699
- DE-A1-102012 110 793
- US-B1- 6 512 238
- US-B1- 7 525 649

## Beschreibung

Die Erfindung betrifft eine Bildaufnahmeeinheit gemäß dem Oberbegriff des Patentanspruchs 1. Derartige Bildaufnahmeeinheiten werden, vorzugsweise im Bereich der automatischen Prüfung von Gegenständen, gewerblich eingesetzt.

Die Begriffe senkrecht und im Rechten Winkel werden im Rahmen der Erfindung als Synonyme verwendet.

Im Rahmen dieser Erfindung werden Zeilenrichtung und Spaltenrichtung nur zur Unterscheidung der beiden Hauptachsen des Flächensensors verwendet. Eine wie auch immer geartete Verknüpfung mit der konkreten Art, die ermittelten Bilddaten aus dem Flächensensor auszulesen, wird hierdurch nicht impliziert.

Für eine Vielzahl von Anwendungen bei der automatischen Prüfung von Gegenständen, insbesondere bei der Prüfung von Hologrammen oder in der Bestimmung von von Gegenständen abgegebenen Lichtfeldern, besteht die Anforderung, dass der abzubildende Winkelbereich, unter dem der Gegenstand bei seiner Aufnahme betrachtbar ist, möglichst groß ist und, dass die einzelnen Anteile des Lichts, die vom Gegenstand gegebenenfalls unter unterschiedlichen Raumrichtungen abgegeben werden, möglichst isoliert voneinander ermittelt werden können.

Die Erfindung stellt sich die Aufgabe, eine einfach herzustellende Bildaufnahmeeinheit zur Verfügung zu stellen, die den aufzunehmenden Gegenstand unter einem möglichst großen Winkel abbildet.

Die Erfindung löst diese Aufgabe bei einer Bildaufnahmeeinheit der eingangs genannten Art mit den kennzeichnenden Merkmalen des Patentanspruchs 1.

Bei einer Bildaufnahmeeinheit umfassend einen Flächensensor mit rasterförmig in Zeilen und Spalten angeordneten Sensorpixeln und eine vor dem Flächensensor angeordnete optische Einheit, vorzugsweise eine Linse oder ein Linsensystem, wobei die optische Einheit innerhalb ihres Aufnahmebereichs auf einer Objektebene befindliche Gegenstände durch eine Aperturblende auf den Flächensensor abbildet, dadurch gekennzeichnet, dass im Strahlengang zwischen der Objektebene und dem Flächensensor eine Schlitzblende vorgesehen ist, wobei der Schlitz der Schlitzblende parallel zu einer Zeile des Flächensensors verläuft.

Durch diese vorteilhafte Maßnahme kann ein sehr kleiner und kompakter Aufbau der Bildaufnahmeeinheit erreicht werden, wobei unterschiedlichen Sensorpixeln des Flächensensors solche Strahlen zugeordnet sind, die zueinander große Winkelabstände aufweisen. Hierdurch ist es möglich, durch Abbildung des Gegenstandes bei einer Relativbewegung zur Kamera diesen Gegenstand aus sehr unterschiedlichen Richtungen zu betrachten und damit einen relativ großen Ausschnitt des vom Gegenstand abgegebenen Lichtfelds zu erhalten.

Durch die Erfindung ist es möglich, das Lichtfeld von Objekten in einem größeren Winkelbereich aufzunehmen, wobei die optische Konfiguration erhalten bleibt und so die Bildaufnahmeeinheit kompakter und vielseitiger gemacht wird.

Besonders einfache Lichtfeldaufnahmen des Gegenstandes sowie eine automatisierte Prüfung einer Vielzahl von Gegenständen können erreicht werden, indem eine Transporteinrichtung vorhanden ist, die Gegenstände im Bereich der Objektebene durch den Aufnahmebereich entlang einer Transportrichtung bewegt, wobei die Transportrichtung senkrecht auf die Richtung des Schlitzes der Schlitzblende steht.

Alternativ kann, insbesondere für Anwendungen, bei denen sich Gegenstände sehr nahe an der Bildaufnahmeeinheit befinden, vorgesehen sein, dass die Schlitzblende im Bereich zwischen der Ebene des Flächensensors und dem bildseitigen Brennpunkt der optischen Einheit liegt, insbesondere im Bereich von der Ebene des Flächensensors bis zu einem Dreißigstel des Abstands zu der Aperturblende. Hierdurch wird ein großer Winkelbereich der Sehstrahlen erreicht, ohne dass sich die Schlitzblende vor der optischen Einheit befinden muss.

Um eine gute Winkelverteilung der Sehstrahlen zu erreichen, kann vorgesehen sein, dass die Schlitzblende zwischen der Aperturblende und der Objektebene angeordnet ist, insbesondere im Bereich von der Objektebene bis zu einem Drittel des Abstands zu der Aperturblende.

Um Streueffekte des Lichts auf die optische Einheit wirksam zu vermeiden, kann vorgesehen sein, dass die beiden am Schlitz gegenüberliegenden Teilbereiche der Schlitzblende in Richtung zur optischen Einheit hin geneigt oder gekrümmt sind.

In diesem Fall ist es auch möglich, die Beleuchtungsintensität bzw. die Gleichmäßigkeit der Beleuchtung zu verbessern, indem an den von der optischen Einheit abgewandten Seiten der Teilbereiche der Schlitzblende jeweils eine Beleuchtungseinheit zur Beleuchtung des Aufnahmebereichs vorgesehen ist.

Die Dimensionierung der Schlitzblende kann bevorzugt vorgenommen werden, indem der Schlitz der Schlitzblende so zwischen Flächensensor und Objektebene positioniert ist, dass höchstens die Hälfte jener Lichtmenge, die von einem beliebigen Punkt im Aufnahmenbereich ausgeht, die Pixel am Flächensensor erreicht, welche ohne Schlitzblende die Pixel erreichen würde.

Eine bevorzugte Ausführungsform, die einen besonders einfachen Aufbau und gute optische Ergebnisse ermöglicht sieht vor,
- dass die Aperturblende, der Flächensensor und der Aufnahmebereich von der optischen Achse der optischen Einheit jeweils in deren Mittelpunkt geschnitten werden und/oder symmetrisch um die optische Achse angeordnet sind, und/oder
- dass die optische Achse der optischen Einheit senkrecht auf die Objektebene steht.

Bevorzugt können die optische Einheit und die Schlitzblende zueinander angeordnet werden, indem die optische Achse der optischen Einheit den, insbesondere rechteckigen, Bereich des Schlitzes der Schlitzblende in dessen Mittelpunkt, insbesondere Flächenmittelpunkt, schneidet und/oder der Schlitz der Schlitzblende symmetrisch um die optische Achse der optischen Einheit angeordnet ist. Dies ermöglicht einen einfachen Aufbau sowie eine gute Abbildungsqualität.

Um zu erreichen, dass eventuell auftretende Unschärfeeffekte nach einer Koordinatenrichtung stärker vorhanden sind als nach der anderen Koordinatenrichtung, kann vorgesehen sein, dass zwischen der Objektebene und dem Flächensensor eine weitere Schlitzblende angebracht ist, wobei der weitere Schlitz der weiteren Schlitzblende senkrecht zum Schlitz der Schlitzblende, insbesondere parallel zur Transportrichtung, angeordnet ist. Mit Hilfe der weiteren Schlitzblende, die senkrecht zur ersten Schlitzblende verläuft, ist es weiters möglich, zusätzlich die Abbildungsqualität der Vorrichtung zu optimieren.

Ein mechanisch vorteilhafter Aufbau, der zu Abbildern mit hoher Qualität führt, sieht dabei vor, dass die optische Achse der optischen Einheit den, insbesondere rechteckigen, Bereich des Schlitzes der Schlitzblende in dessen Mittelpunkt, insbesondere Flächenmittelpunkt, schneidet und/oder der Schlitz der Schlitzblende symmetrisch um die optische Achse der optischen Einheit angeordnet ist.

Die Breite des Schlitzes der weiteren Schlitzblende wird vorteilhafterweise derart gewählt, dass die Breite des Schlitzes der Schlitzblende und die Breite des Schlitzes der weiteren Schlitzblende so ausgeführt sind, dass sich eine quadratische oder annähernd quadratische effektive Apertur ergibt. Dies ermöglicht, dass allenfalls auftretende Unschärfen nach beiden Koordinatenrichtungen etwa gleich sind.

Vorteilhafte Änderungen der weiteren Schlitzblende sehen vor, dass die Ebene des weiteren Schlitzes der weiteren Schlitzblende im Bereich zwischen der Ebene der Aperturblende und dem bildseitigen Brennpunkt der optischen Einheit liegt, insbesondere in der Ebene der Aperturblende oder der Ebene des bildseitigen Brennpunktes.

Der Stand der Technik ist aus den Druckschriften US6512238B1, DE4434699A1, US7525649B1 und DE102012110793A1 sowie dem Art. 54(3)- EPÜ-Dokument WO2015164540A1 bekannt.

Vier Ausführungsbeispiele der Erfindung werden anhand der folgenden Figuren näher dargestellt. **Fig. 1** zeigt ein erstes Ausführungsbeispiel der Erfindung mit einer Schlitzblende, die im Bereich zwischen der optischen Einheit und einer Transporteinheit angeordnet ist. **Fig. 2** zeigt eine zweite Ausführungsform der Erfindung, mit einer Schlitzblende, die zur optischen Einheit hingeneigt ist und einer Beleuchtungseinheit. **Fig. 3** zeigt eine dritte Ausführungsform der Erfindung mit zwei Schlitzblenden.

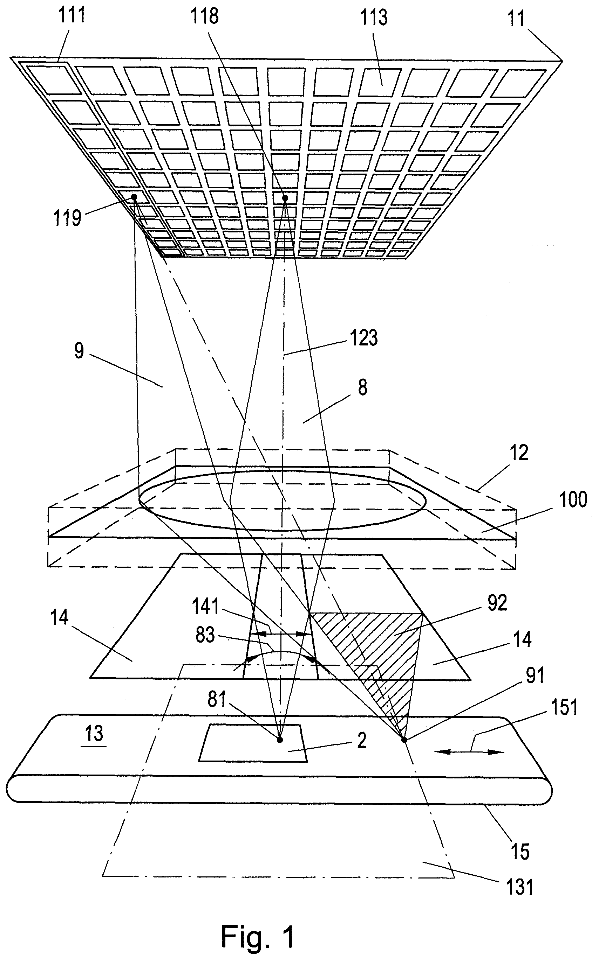

Die in **Fig. 1** dargestellte Ausführungsform der Erfindung betrifft eine Bildaufnahmeeinheit 1, die einen Flächensensor 11 umfasst. Dieser Flächensensor umfasst eine Anzahl von Sensorpixeln 113, die in Zeilen und Spalten angeordnet sind. Vor dem Flächensensor 11 ist eine optische Einheit 12 angeordnet, die im vorliegenden Fall als Linse 120 ausgebildet ist. Alternativ besteht bei allen Ausführungsformen der Erfindung auch die Möglichkeit, an Stelle einer einzelnen Linse 120 ein Linsensystem 121, umfassend eine Vielzahl von Einzellinsen, zu verwenden. Die optische Einheit 12 weist eine Aperturblende 100 auf, die im vorliegenden Fall kreisförmig ausgebildet ist. Gegenstände 2, die sich auf einer Objektebene 13 befinden und innerhalb eines Aufnahmebereichs 131 auf der Objektebene 13 liegen, werden durch diese Aperturblende 100 auf einen Flächensensor 11 abgebildet.

Die optische Einheit 12 weist eine optische Achse 123 auf. Die Aperturblende 100, der Flächensensor 11 und der Aufnahmebereich 131 werden von der optischen Achse 123 jeweils in ihrem Mittelpunkt geschnitten. Darüber hinaus ist es auch vorteilhaft, wenn die Aperturblende 100, der Flächensensor 11 und der Aufnahmebereich 131 symmetrisch rund um die optische Achse 123 angeordnet sind. Weiters steht die optische Achse 123 der optischen Einheit 12 senkrecht auf die Objektebene sowie auf die Zeilen- und Spaltenrichtung des Flächensensors 11.

Weiters umfasst die im ersten Ausführungsbeispiel der Erfindung dargestellte Bildaufnahmeeinheit 1 eine Transporteinrichtung 15, mit der Gegenstände durch den Aufnahmebereich und/oder im Bereich der Objektebene entlang einer Transportrichtung 151 bewegt werden.

Bei der ersten Ausführungsform der Erfindung ist vorgesehen, dass im Strahlengang zwischen der Objektebene und der Aperturblende 100 eine Schlitzblende 14 angeordnet ist.

Der Schlitz 141 der Schlitzblende verläuft parallel zu einer Zeile 111 des Flächensensors, dementsprechend verläuft die Transportrichtung 151 der Transporteinrichtung 15 parallel zur Spaltenrichtung des Zeilensensors 11 bzw. senkrecht zur Zeilenrichtung 111 des Flächensensors.

Der Schlitz 141 der Schlitzblende ist im vorliegenden Ausführungsbeispiel rechteckig ausgebildet. Die optische Achse 123 der optischen Einheit 12 schneidet die Schlitzblende im Mittelpunkt des Schlitzes 141. Der Schlitz 141 liegt symmetrisch um die optische Achse 123 der optischen Einheit 12.

Die Transportrichtung 151 der Transporteinrichtung 15 und die Richtung des Schlitzes 141 der Schlitzblende 14 stehen aufeinander senkrecht.

Die Schlitzblende 14 ist im vorliegenden Ausführungsbeispiel der Erfindung von der Objektebene 131 genau so weit entfernt wie von der Aperturblende 100 der optischen Einheit 12. Es ist aber auch möglich, dass sie einen Abstand zur Objektebene 131 aufweist, der einem Drittel des Abstands der Objektebene 13 von der Aperturblende 100 entspricht. Um den Winkelbereich, unter dem Gegenstände 2 auf der Objektebene 131 aufgenommen werden können, zu erhöhen, kann die Schlitzblende 14 auch näher an die Objektebene 131 herangeführt werden.

In **Fig. 1** ist der Strahlengang 9 eines Sensorpixels 119 näher dargestellt. Der Punkt 91 wird auf der Objektebene 1 bzw. auf dem Aufnahmebereich 131 auf das Sensorpixel 119 abgebildet. Von dem vom Objektpunkt 91 abgestrahlten Licht wird ein schraffierter Teilbereich 92 von der Schlitzblende 14 ausgeschlossen, sodass lediglich ein enger Winkelbereich 93 durch den Schlitz 141 der Schlitzblende 14 zur optischen Einheit 12 gelangt. Dieser Bereich wird von der optischen Einheit 12 auf das Sensorpixel 119 abgebildet. **Fig. 1** zeigt den Strahlengang 8 eines auf dem Gegenstand 2 befindlichen Punktes 81. Das Licht eines unmittelbar auf dem Gegenstand befindlichen Punkts 81 gelangt nur durch den Spalt 141 der Schlitzblende 14 in den Bereich der optischen Einheit 12 und wird auf ein Sensorpixel 118 abgebildet. Daher können mit der vorliegenden Ausführungsform der Erfindung bei Bewegung des Gegenstandes 2 Bilder eines Gegenstandes 2 erstellt werden, die das Lichtfeld des Gegenstandes zeigen, wobei eine Vielzahl von unterschiedlichen und winkelmäßig eng begrenzten Teilbereichen eines großen Winkelbereichs detektierbar ist.

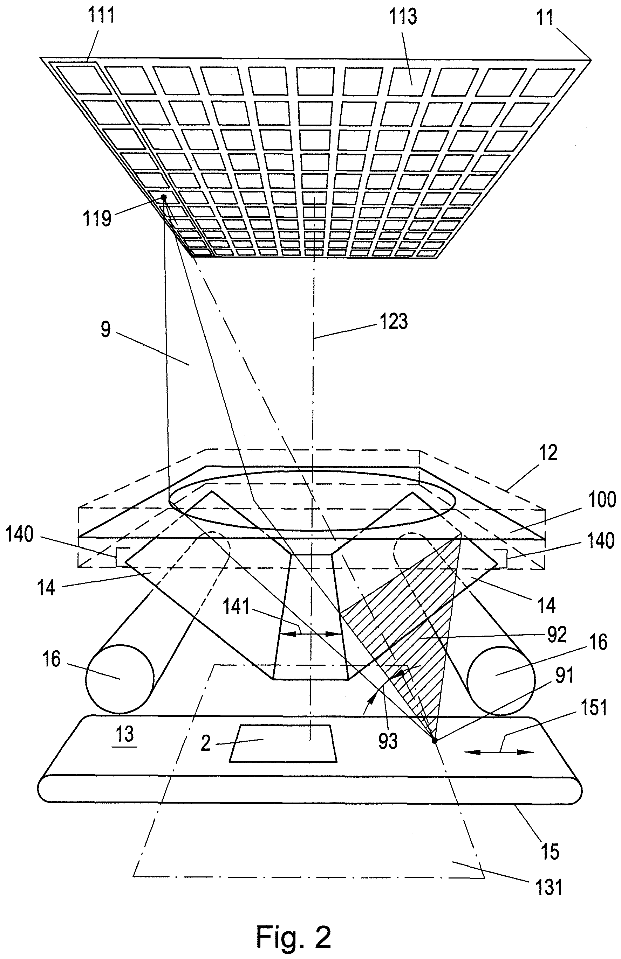

In einer in **Fig. 2** dargestellten zweiten Ausführungsform, die im übrigen der ersten Ausführungsform der Erfindung entspricht, sind die beiden am Schlitz 141 einander gegenüberliegenden Teile der Schlitzblende 14 zur optischen Einheit 12 hin gekrümmt. Von der optischen Einheit aus gesehen, hinter den beiden Teilbereichen 140 der Schlitzblende 14, sind zwei Beleuchtungseinheiten 16 angeordnet, die den Aufnahmebereich 131 beleuchten.

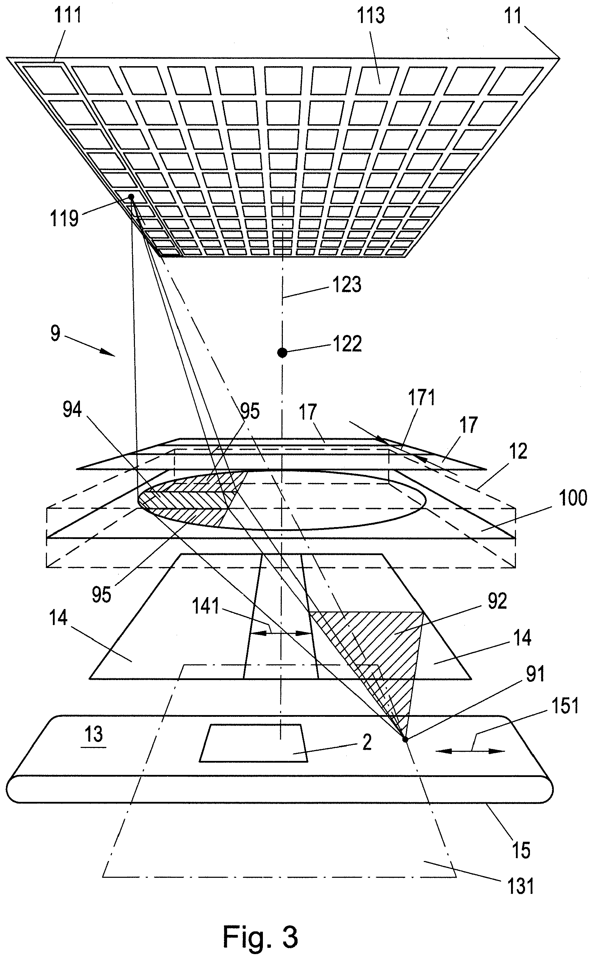

In **Fig. 3** ist eine dritte Ausführungsform der Erfindung dargestellt, die bis auf die im Folgenden dargestellten Abweichungen der ersten Ausführungsform der Erfindung entspricht. Bei dieser bevorzugten Ausführungsform der Erfindung ist zusätzlich eine weitere Schlitzblende 17 vorgesehen, deren Schlitz 171 senkrecht auf den Schlitz 141 der Schlitzblende 14 steht. Der weitere Schlitz 171 steht parallel zur Transportrichtung 151 der Transporteinrichtung 15.

Die weitere Schlitzblende 17 kann an unterschiedlichen Positionen des Strahlengangs 9 angeordnet werden. Besonders bevorzugt kann die Ebene des weiteren Schlitzes 171 und der weiteren Schlitzblende 17 zwischen der Ebene der Aperturblende 100 und dem bildseitigen Brennpunkt 122 der optischen Einheit 12, dh demjenigen Brennpunkt 122, der zwischen der optischen Einheit 12 und dem Flächensensor 11 liegt, festgelegt werden. Besonders vorteilhaft kann die Ebene des weiteren Schlitzes 171 bzw. der Schlitzblende 17 in die Ebene der Aperturblende 100 selbst oder in die Ebene des bildseitigen Brennpunktes 122 selbst gelegt werden.

Wird die weitere Schlitzblende 17 sehr nahe an die Aperturblende 100 herangeführt, wird hierdurch eine gute Helligkeitsverteilung sowie ein großer Abbildungsbereich erreicht. Liegt die weitere Schlitzblende 7 hingegen im Bereich des bildseitigen Brennpunktes 122 der optischen Einheit 12 oder direkt auf diesem, so liegt - senkrecht auf die Transportrichtung - eine telezentrische Abbildung vor, bei der perspektivische Verzerrungen senkrecht auf die Transportrichtung 151 bzw. in Richtung des Schlitzes 171 der weiteren Schlitzblende 17 vermieden werden. Mit der konkreten Auswahl der Schlitzbreite des weiteren Schlitzes 171 kann festgelegt werden, wie groß die einzelnen Winkelbereiche senkrecht auf die Transportrichtung des von den Gegenstandpunkten 81, 91 abgestrahlten Licht sein sollen und wie hell das am Flächensensor 11 erzielte Bild ist.

Auch die weitere Schlitzblende 17 steht senkrecht auf die optischen Achse 123. Die Mitte der weiteren Schlitzblende 17 liegt unmittelbar auf der optischen Achse 123. Die Schlitzblende 17 ist symmetrisch zur optischen Achse 123.

Wie bereits bei der ersten und zweiten Ausführungsform der Erfindung wird durch die Anordnung der ersten Schlitzblende 14 zwischen der optischen Einheit 12 und dem Gegenstandspunkt 91 ein Anteil 92 des vom Gegenstandspunkt 91 abgesonderten Lichts der Schlitzblende 14 ausgefiltert. Durch die zweite Schlitzblende 17 werden aus dem Strahlengang 9 des vom Gegenstandpunkts 91 abgegebenen Lichts weitere Anteile, dargestellt durch ihren Querschnitt 95, herausgefiltert, sodass lediglich ein geringerer Anteil des vom Gegenstandspunkt 91 abgestrahlten Lichts auf das Sensorpixel 119 trifft. Der durch die Aperturblende 100 treffende Querschnitt 94 des Strahlengangs 9, der letztendlich auf das Sensorpixel 119 abgebildet ist, weist im vorliegenden Ausführungsbeispiel eine annähernd quadratische Form auf, wodurch bei Unschärfeeffekten eine annährend gleiche Unschärfe in Zeilen- und Spaltrichtung erreicht wird. Diese quadratische Form wird allgemein auch als effektive Apertur 94 bezeichnet.

Bei einer vierten Ausführungsform der Erfindung, die nicht in den Zeichnungen dargestellt ist, liegt die Schlitzblende 14 im Bereich zwischen der Ebene des Flächensensors 11 und dem bildseitigen Brennpunkt 122 (Fig. 2) der optischen Einheit 12. Bei der in der vierten Ausführungsform bevorzugt dargestellten Aufnahmeeinheit 1 weist die Schlitzblende 14 einen Abstand von der Aperturblende 100 der optischen Einheit 12 auf, der einem Dreißigstel des Abstandes von der Aperturblende 100 zum Flächensensor 11 entspricht. Mit dieser Anwendung kann ein kompakter Aufbau erreicht werden. Zudem kann insbesondere bei mikroskopischen Anordnungen, ein größerer Winkelbereich erreicht werden.

Wie aus der vierten Ausführungsform der Erfindung ersichtlich, ist es nicht zwingend, dass die Schlitzblende 14 zwischen Objektebene und optischer Einheit 12 liegt. Insgesamt reicht es vielmehr für die Erfindung aus, dass im Strahlengang zwischen der Objektebene 13 und dem Flächensensor 11 eine Schlitzblende vorgesehen ist.

Bei allen Ausführungsformen der Erfindung kann der Schlitz 141 der Schlitzblende 14 so breit gewählt werden, und die Schlitzblende 14 so zwischen dem Flächensensor 11 und der Objektebene 13 positioniert wird, dass nicht mehr als die Hälfte jener Lichtmenge das Sensorpixel 113, 118, 119 erreicht, die das Sensorpixel 113, 118, 119 erreichen würde, wenn keine Schlitzblende vorhanden wäre.

Grundsätzlich ist der Begriff der Schlitzblende allgemein aus dem Bereich der Optik bekannt. Bei allen Ausführungsformen der Erfindung kann bevorzugt und ohne Beschränkung der Allgemeinheit der Erfindung unter einer Schlitzblende eine durchsichtige Ausnehmung von einer lichtundurchlässigen Platte verstanden werden, deren maximale Längsausdehnung in einem Verhältnis zur maximalen Querausdehnung von 2:1 oder mehr steht und die zwei längeren Seiten parallel zueinander sind. Vorteilhaft kann eine Schlitzblende bei allen Ausführungsformen der Erfindung annähernd quadratisch sein.

## Patentansprüche

1. Bildaufnahmeeinheit (1) umfassend einen Flächensensor (11) mit rasterförmig in Zeilen und Spalten angeordneten Sensorpixeln (113) und eine vor dem Flächensensor (11) angeordnete optische Einheit (12), vorzugsweise eine Linse (120) oder ein Linsensystem (121), wobei die optische Einheit (12) innerhalb ihres Aufnahmebereichs (131) auf einer Objektebene (13) befindliche Gegenstände (2) durch eine Aperturblende (100) auf den Flächensensor (11) abbildet,
- wobei im Strahlengang zwischen der Objektebene (13) und dem Flächensensor (11) eine Schlitzblende (14) vorgesehen ist, wobei der Schlitz (141) der Schlitzblende (14) parallel zu einer Zeile (111) des Flächensensors (11) verläuft, **dadurch gekennzeichnet,**
- **dass** der Schlitz (141) der Schlitzblende (14) so zwischen Flächensensor (11) und Objektebene (13) positioniert ist, dass höchstens die Hälfte jener Lichtmenge, die von einem beliebigen Punkt im Aufnahmenbereich (131) ausgeht, die Pixel (111) am Flächensensor (11) erreicht, welche ohne Schlitzblende (14) die Pixel (111) erreichen würde.

2. Bildaufnahmeeinheit (1) nach Anspruch 1, **gekennzeichnet durch** eine Transporteinrichtung (15), die Gegenstände (2) im Bereich der Objektebene (13) durch den Aufnahmebereich (131) entlang einer Transportrichtung (151) bewegt, wobei die Transportrichtung (151) senkrecht auf die Richtung des Schlitzes (141) der Schlitzblende (14) steht.

3. Bildaufnahmeeinheit nach einem der Ansprüche 1 bis 2, **dadurch gekennzeichnet, dass** die Schlitzblende (14) im Bereich zwischen der Ebene des Flächensensors (11) und dem bildseitigen Brennpunkt (122) der optischen Einheit (12) liegt, insbesondere im Bereich von der Ebene des Flächensensors (11) bis zu einem Dreißigstel des Abstands zu der Aperturblende (100).

4. Bildaufnahmeeinheit (1) nach Anspruch 1 oder 2, **dadurch gekennzeichnet, dass** die Schlitzblende (14) zwischen der Aperturblende (100) und der Objektebene (13) angeordnet ist, insbesondere im Bereich von der Objektebene (13) bis zu einem Drittel des Abstands zu der Aperturblende (100).

5. Bildaufnahmeeinheit (1) nach Anspruch 4, **dadurch gekennzeichnet, dass** die beiden am Schlitz (141) gegenüberliegenden Teilbereiche der Schlitzblende (14) in Richtung zur optischen Einheit (12) hin geneigt oder gekrümmt sind.

6. Bildaufnahmeeinheit (1) nach Anspruch 5, **dadurch gekennzeichnet, dass** an den von der optischen Einheit (12) abgewandten Seiten der Teilbereiche (140) der Schlitzblende (14) jeweils eine Beleuchtungseinheit (16) zur Beleuchtung des Aufnahmebereichs (131) vorgesehen ist.

7. Bildaufnahmeeinheit nach einem der Ansprüche 1 bis 6, **dadurch gekennzeichnet,**
- **dass** die Aperturblende (100), der Flächensensor (11) und der Aufnahmebereich (131) von der optischen Achse (123) der optischen Einheit (12) jeweils in deren Mittelpunkt geschnitten werden und/oder symmetrisch um die optische Achse (123) angeordnet sind, und/oder
- **dass** die optische Achse (123) der optischen Einheit (12) senkrecht auf die Objektebene (13) steht.

8. Bildaufnahmeeinheit nach einem der Ansprüche 1 bis 7, **dadurch gekennzeichnet, dass** die optische Achse (123) der optischen Einheit (12) den, insbesondere rechteckigen, Bereich des Schlitzes (141) der Schlitzblende (14) in dessen Mittelpunkt, insbesondere Flächenmittelpunkt, schneidet und/oder der Schlitz (141) der Schlitzblende (14) symmetrisch um die optische Achse (123) der optischen Einheit (12) angeordnet ist.

9. Bildaufnahmeeinheit (1) nach einem der Ansprüche 1 bis 8, **dadurch gekennzeichnet, dass** zwischen der Objektebene (13) und dem Flächensensor (11) eine weitere Schlitzblende (17) angebracht ist, wobei der weitere Schlitz (171) der weiteren Schlitzblende (17) senkrecht zum Schlitz (141) der Schlitzblende (14), insbesondere parallel zur Transportrichtung (151), angeordnet ist.

10. Bildaufnahmeeinheit nach Anspruch 9, **dadurch gekennzeichnet, dass** die optische Achse (123) der optischen Einheit (12) den, insbesondere rechteckigen, Bereich des Schlitzes (171) der Schlitzblende (17) in dessen Mittelpunkt, insbesondere Flächenmittelpunkt, schneidet und/oder der Schlitz (171) der Schlitzblende (17) symmetrisch um die optische Achse (123) der optischen Einheit (12) angeordnet ist.

11. Bildaufnahmeeinheit nach einem der Ansprüche 9 oder 10, **dadurch gekennzeichnet, dass** die Breite des Schlitzes (141) der Schlitzblende (14) und die Breite des Schlitzes (171) der weiteren Schlitzblende (17) so ausgeführt sind, dass sich eine quadratische oder annähernd quadratische effektive Apertur (94) ergibt.

12. Bildaufnahmeeinheit nach einem der Ansprüche 9 bis 11, **dadurch gekennzeichnet, dass** die Ebene des weiteren Schlitzes (171) der weiteren Schlitzblende (17) im Bereich zwischen der Ebene der Aperturblende (100) und dem bildseitigen Brennpunkt (122) der optischen Einheit (12) liegt, insbesondere in der Ebene der Aperturblende (100) oder der Ebene des bildseitigen Brennpunktes (122).

## Claims

1. Image recording unit (1) comprising a surface sensor (11) having sensor pixels (113) arranged raster-shaped in rows and columns and an optical unit (12) arranged in front of the surface sensor (11), preferably a lens (120) or a lens system (121), wherein the optical unit (12) images objects (2) located on an object plane (13) within its recording area (131) through an aperture diaphragm (100) onto the surface sensor (11),
- wherein a slit diaphragm (14) is provided in the optical path between the object plane (13) and the surface sensor (11), wherein the slit (141) of the slit diaphragm (14) runs parallel to a row (111) of the surface sensor (11), **characterised in**
- **that** the slit (141) of the slit diaphragm (14) is positioned between the surface sensor (11) and the object plane (13) so that at most half of that amount of light, which emanates from any point in the recording area (131) reaches the pixels (111) on the surface sensor (11), which would reach the pixels (111) without slit diaphragm (14).

2. Image recording unit (1) according to claim 1, **characterised by** a transport device (15), which moves the objects (2) in the area of the object plane (13) through the recording area (131) along a transport direction (151), wherein the transport direction (151) is perpendicular to the direction of the slit (141) of the slit diaphragm (14).

3. Image recording unit according to any one of claims 1 to 2, **characterised in that** the slit diaphragm (14) is located in the area between the plane of the surface sensor (11) and the image-side focal point (122) of the optical unit (12), in particular in the area from the plane of the surface sensor (11) to a thirtieth of the distance to the aperture diaphragm (100).

4. Image recording unit (1) according to claim 1 or 2, **characterised in that** the slit diaphragm (14) is arranged between the aperture diaphragm (100) and the object plane (13), in particular in the area from the object plane (13) to a third of the distance to the aperture diaphragm (100).

5. Image recording unit (1) according to claim 4, **characterised in that** the two partial areas of the slit diaphragm (14) opposite the slit (141) are inclined or curved in the direction towards the optical unit (12).

6. Image recording unit (1) according to claim 5, **characterised in that** on the sides of the partial areas (140) of the slit diaphragm (14) facing away from the optical unit (12) in each case an illumination unit (16) for illuminating the recording area (131) is provided.

7. Image recording unit according to any one of claims 1 to 6, **characterised in**
- **that** the aperture diaphragm (100), the surface sensor (11) and the recording area (131) are intersected by the optical axis (123) of the optical unit (12) in each case in the centre thereof and/or are arranged symmetrically about the optical axis (123), and/or
- **that** the optical axis (123) of the optical unit (12) is perpendicular to the object plane (13).

8. Image recording unit according to any one of claims 1 to 7, **characterised in that** the optical axis (123) of the optical unit (12) intersects the, in particular rectangular, area of the slit (141) of the slit diaphragm (14) in the centre thereof, in particular the centre of the surface and/or the slit (141) of the slit diaphragm (14) is arranged symmetrically about the optical axis (123) of the optical unit (12).

9. Image recording unit (1) according to any one of claims 1 to 8, **characterised in that** a further slit diaphragm (17) is mounted between the object plane (13) and the surface sensor (11), wherein the further slit (171) of the further slit diaphragm (17) is arranged perpendicular to the slit (141) of the slit diaphragm (14), in particular parallel to the transport direction (151).

10. Image recording unit according to claim 9, **characterised in that** the optical axis (123) of the optical unit (12) intersects the, in particular rectangular, area of the slit (171) of the slit diaphragm (17) in the centre thereof, in particular the centre of the surface and/or the slit (171) of the slit diaphragm (17) is arranged symmetrically about the optical axis (123) of the optical unit (12).

11. Image recording unit according to any one of claims 9 or 10, **characterised in that** the width of the slit (141) of the slit diaphragm (14) and the width of the slit (171) of the further slit diaphragm (17) are designed such that a square or approximately square effective aperture (94) results.

12. Image recording unit according to any one of claims 9 to 11, **characterised in that** the plane of the further slit (171) of the further slit diaphragm (17) is located in the area between the plane of the aperture diaphragm (100) and the image-side focal point (122) of the optical unit (12), in particular in the plane of the aperture diaphragm (100) or the plane of the image-side focal point (122)

## Revendications

1. Dispositif d'enregistrement d'images (1) comportant un capteur plan (11) avec des pixels de capteur (113) disposés sous forme d'une grille de lignes et de colonnes et une unité optique (12) disposée devant le capteur plan (11), de préférence une lentille (120) ou un système de lentilles (121), dans lequel l'unité optique (12) reproduit des objets (2), se trouvant sur un plan d'objet (13) à l'intérieur de sa zone d'enregistrement (131), à travers un diaphragme (100) sur le capteur plan (11),
- dans lequel un diaphragme à fente (14) est prévu dans la trajectoire de faisceau entre le plan d'objet (13) et le capteur plan (11), dans lequel la fente (141) du diaphragme à fente (14) s'étend parallèlement à une ligne (111) du capteur plan (11), **caractérisé**
- **en ce que** la fente (141) du diaphragme à fente (14) est positionnée entre le capteur plan (11) et le plan d'objet (13) de sorte que, au plus, la moitié de chaque quantité de lumière, qui provient d'un point quelconque dans la zone d'enregistrement (131), atteint les pixels (111) au niveau du capteur plan (11), qui sans le diaphragme à fente (14) aurait atteint les pixels (111).

2. Dispositif d'enregistrement d'images (1) selon la revendication 1, **caractérisé par** un moyen de transport (15) qui déplace des objets (2) dans la zone du plan d'objet (13) à travers la zone d'enregistrement (131) le long d'une direction de transport (151), dans lequel la direction de transport (151) est perpendiculaire à la direction de la fente (141) du diaphragme à fente (14).

3. Dispositif d'enregistrement d'images selon l'une quelconque des revendications 1 et 2, **caractérisé en ce que** le diaphragme à fente (14) est situé dans la zone entre le plan du capteur plan (11) et le foyer, côté image, (122) de l'unité optique (12), en particulier dans la zone allant du plan du capteur plan (11) jusqu'à un trentième de la distance au diaphragme (100).

4. Dispositif d'enregistrement d'images (1) selon la revendication 1 ou 2, **caractérisé en ce que** le diaphragme à fente (14) est disposé entre le diaphragme (100) et le plan d'objet (13), en particulier dans la zone allant du plan d'objet (13) jusqu'à un tiers de la distance au diaphragme (100).

5. Dispositif d'enregistrement d'images (1) selon la revendication 4, **caractérisé en ce que** les zones partielles du diaphragme à fente (14), se trouvant face à face au niveau de la fente (141) sont inclinées ou incurvées en direction de l'unité optique (12).

6. Dispositif d'enregistrement d'images (1) selon la revendication 5, **caractérisé en ce que** sur les côtés des zones partielles (140) du diaphragme à fente (14) disposés à l'opposé de l'unité optique (12) est prévue respectivement une unité d'éclairage (16) pour éclairer la zone d'enregistrement (131).

7. Dispositif d'enregistrement d'images selon l'une quelconque des revendications 1 à 6, **caractérisé**
- **en ce que** le diaphragme (100), le capteur plan (11) et la zone d'enregistrement (131) sont chacun coupés en leur point central par l'axe optique (123) de l'unité optique (12) et/ou sont chacun disposés symétriquement autour de l'axe optique (123), et/ou
- **en ce que** l'axe optique (123) de l'unité optique (12) est perpendiculaire au plan d'objet (13).

8. Dispositif d'enregistrement d'images selon l'une quelconque des revendications 1 à 7, **caractérisé en ce que** l'axe optique (123) de l'unité optique (12) coupe la zone, en particulier rectangulaire, de la fente (141) du diaphragme à fente (14) en son point central, en particulier le barycentre et/ou la fente (141) du diaphragme à fente (14) est disposée symétriquement autour de l'axe optique (123) de l'unité optique (12).

9. Dispositif d'enregistrement d'images (1) selon l'une quelconque des revendications 1 à 8, **caractérisé en ce que**, entre le plan d'objet (13) et le capteur plan (11) est installé un autre diaphragme à fente (17), dans lequel l'autre fente (171) de l'autre diaphragme à fente (17) est disposée perpendiculaire à la fente (141) du diaphragme à fente (14), en particulier parallèle à la direction de transport (151).

10. Dispositif d'enregistrement d'images selon la revendication 9, **caractérisé en ce que** l'axe optique (123) de l'unité optique (12) coupe la zone, en particulier rectangulaire, de la fente (171) du diaphragme à fente (17) en son point central, en particulier en son barycentre, et/ou la fente (171) du diaphragme à fente (17) est disposée symétriquement autour de l'axe optique (123) de l'unité optique (12).

11. Dispositif d'enregistrement d'images selon l'une quelconque des revendications 9 ou 10, **caractérisé en ce que** la largeur de la fente (141) du diaphragme à fente (14) et la largeur de la fente (171) de l'autre diaphragme à fente (17) sont exécutées de sorte qu'il en résulte une ouverture effective (94) quadratique ou approximativement quadratique.

12. Dispositif d'enregistrement d'images selon l'une quelconque des revendications 9 à 11, **caractérisé en ce que** le plan de l'autre fente (171) de l'autre diaphragme à fente (17) est situé dans la zone entre le plan du diaphragme (100) et le foyer, côté image, (122) de l'unité optique (12), en particulier dans le plan du diaphragme (100) ou dans le plan du foyer, côté image, (122).
